# EUROPEAN PATENT SPECIFICATION

(11) **EP 1 435 119 B1**
(45) Date of publication and mention of the grant of the patent: **10.08.2011**
(21) Application number: 02781934.1
(22) Date of filing: 10.10.2002
(51) Int. Cl.: H01M 4/04

(54) **ELECTRODE MATERIAL AND PREPARATION METHOD THEREOF**
ELEKTRODENMATERIAL UND HERSTELLUNGSVERFAHREN DAFÜR
MATERIAU ELECTRODE ET SON PROCEDE DE PREPARATION

(30) Priority: 12.10.2001 KR 2001063088; 19.03.2002 KR 2002014823
(43) Date of publication of application: 07.07.2004
(73) Proprietor: LG Chem, Ltd., Seoul 150-721 (KR)
(72) Inventor: PARK, Hong-Kyu, Daejeon-city 305-707 (KR); PARK, Seong-Yong, Yuseong-gu Daejeon-city 305-340 (KR); KWON, Yong-Hoon, Yuseong-gu, Daejeon-city 305-340 (KR); KIM, Jin-On, Daejeon-city 305-340 (KR); LEE, Yeon-Hee, Jindo-gun, Jeollanam-do 539-830 (KR); IM, Keun-Yung, Seongnam-city, Gyeonggi-do 462-812 (KR); LEE, Ki-Young, Daejeon-city 305-340 (KR)
(74) Representative: Casalonga, Axel
(86) International application number: PCT/KR2002/001894
(87) International publication number: WO 2003/032414

(56) References cited:
- GB-A- 939 823
- JP-A- 52 009 043
- JP-A- 52 071 628

## Description

### BACKGROUND OF THE INVENTION

### (a) Field of the Invention

The present invention relates to an anode material for a battery and a preparation method. thereof, and particularly to an anode material for a battery comprising a carbon core and a coating layer containing a fluorine-type organometal salt and having superior room temperature and high temperature cycle life properties, and a preparation method thereof.

### (b) Description of the Related Art

Recently, electronic equipment such as telephones, video cameras, computers, etc. have been made portable and are thus miniaturized. Additionally, batteries and main power supply devices in such equipment have also been miniaturized. However, consumed power increases rather than decreases as the equipment becomes smaller, as functions of such equipment are diversified. A lithium or lithium ion secondary battery is one battery satisfying requirements of such miniaturized equipment, because it has a high capacity and shows high voltage. A lithium ion secondary battery uses a non-aqueous electrolyte and a material capable of intercalating and deintercalating lithium as a cathode and an anode, and it has a separator that separates the two electrodes in the electrolyte.

As an anode material, lithium metal has been tested, but lithium can form dendrites during the charge/discharge process that may penetrate the separator to reach the cathode and thus cause a short circuit and ignition. Japanese Laid-open Patent Publication Sho 57-208079 has suggested using graphite with high crystallinity as an electrode material. However, as the crystallinity of graphite becomes higher, capacity per unit weight improves, but high-rate charge properties decrease and exfoliation by the electrolyte occurs on the surface to greatly decrease cycle life properties.

Recently, Japanese Laid-open Patent Publication Sho 57-208079 disclosed a method for coating amorphous carbon on the surface of an electrode by coating an organic substance that can be carbonated on the surface of graphite carbon and firing it, in order to solve the above problems. With this method, electric potential during charge/discharge is similar to that of graphite, namely close to the oxidation-reduction potential of lithium metal, and thus largely contributes to improved cycle life properties, but amorphous carbon existing on the surface has negative effects on capacity.

In a lithium ion secondary battery, battery capacity is determined by capacity per unit weight of cathode active material and anode active material, and irreversible capacity thereof.

Generally, during the first charge process, lithium supplied to a cathode is consumed for decomposition of an electrolyte on the surface of carbon, the anode active material, to form a solid electrolyte interface (SEI), and the solid electrolyte interface restrains decomposition of electrolyte to make the battery operate normally. Since, in order to form a solid electrolyte interface, a specific amount of lithium is consumed and most is supplied from the cathode, battery capacity decreases by as much as the amount of consumed lithium.

In addition, the thickness and properties of the formed solid electrolyte interface is determined by the kinds of carbon, electrolyte, and surface properties of the carbon active material, etc. When the thickness of the formed solid electrolyte interface is thinner and more solid, the amount of consumed lithium is smaller, and thus capacity and cycle life properties of the battery can be improved.

On the surface of carbon with high crystallinity, such as natural graphite or artificial graphite, a substantial irreversible exfoliation reaction occur as a result of reaction with the electrolyte, etc., to greatly decrease battery capacity.

Recently, carbon has been surface-treated and amorphous carbon has been coated to prevent exfoliation as a result of reaction with the electrolyte, and an SEI interface with a minimum thickness is formed to restrain decomposition of the electrolyte. However, as the cycles proceed, the SEI interface is partially destroyed by repeated expansion and contraction of graphite anode active material, and the capacity greatly decreases because of continuous decomposition of the electrolyte, and the energy density also decreases because of a voltage drop due to electrical resistance on each electrode. Particularly, if a raw material such as natural graphite is used, exfoliation occurs on the surface of the graphite to seriously destroy the surface, and a thick solid electrolyte interface is formed on the surface to greatly decrease life properties of the battery.

In order to solve these problems, Japanese Laid-open Patent Publication No. 2000-353545 has disclosed use of various additives that are decomposed earlier than an electrolyte on the surface of cathode and anode active materials to form a solid SEI film, and thus function to improve life properties of a battery. However, since these additives are expensive and the decomposition voltage changes with purity of the electrolyte, etc., they are problematic to use except under special conditions. Additionally, a solid electrolyte interface formed by an additive is thermally unstable, and it is not helpful for the overall stability of a battery.

Accordingly, there is a need for a material that can improve life properties, high temperature storage properties, and capacity of a battery without using an electrolyte additive.

### SUMMARY OF THE INVENTION

In order to solve these problems, it is an object of the present invention to provide an anode active material for a battery that can improve cycle life properties of a battery without using an electrolyte additive.

It is another object of the present invention to provide a method for preparing an anode active material for a battery that can improve high temperature storage properties and capacity as well as cycle life properties of a battery.

In order to achieve these objects, the present invention provides surface-treated carbon, comprising:
a) a carbon core; and
b) a coating layer containing a fluorine-type organometal salt.

The present invention also provides a method for preparing surface-treated carbon, comprising the steps of;
a) providing a carbon core;
b) providing a fluorine-type organometal salt;
c) coating the b) fluorine-type organometal salt on the a) carbon core; and
d) heat-treating the c) coated carbon core.

The present invention also provides a lithium or lithium ion secondary battery comprising the surface-treated carbon as an anode active material.

### BRIEF DESCRIPTION OF THE DRAWINGS

Fig. 1 a is a TGA graph showing thermal change of a fluorine-type organometal salt coated on the surface of a graphite core according to the present invention.
Fig. 1b is a DSC graph showing thermal change of a fluorine-type organometal salt coated on the surface of a graphite core according to the present invention.
Fig. 2a shows charge and discharge curves of graphite of which the surface is coated with a fluorine-type organometal salt according to the present invention, at room temperature (25 °C).
Fig. 2b shows charge and discharge curves of graphite of which the surface is not coated, at room temperature (25 °C).
Fig. 3a shows charge and discharge curves of graphite of which the surface is coated with a fluorine-type organometal salt according to the present invention, at high temperature (55 °C).
Fig. 3b shows charge and discharge curves of graphite of which the surface is not coated, at high temperature (55 °C).
Fig. 4 and Fig. 5 show cycle life properties of batteries at high temperature (55 °C).
Fig. 6 shows C-rate properties, i.e., high-rate charge properties, at room temperature (25 °C) and high temperature (55 °C).

### DETAILED DESCRIPTION AND THE PREFERRED EMBODIMENTS

According to the present invention, a fluorine-type organometal salt-containing metal such as lithium is coated on the surface of carbon, and it is heat-treated at a specific temperature to react the fluorine-type organometal salt with the surface of the carbon to form a solid electrolyte interface thereon. Since metal or lithium from decomposition by-products of organometal salt exists on the surface of the carbon, it provides lithium or metal required for forming a solid electrolyte interface on the surface of an anode during a first charge or formation of a battery.

Accordingly, lithium from a cathode is not consumed, and thus the amount of lithium capable of reversibly intercalating and deintercalating increases to improve capacity of a battery. Additionally, since organic compounds existing as anions of a fluorine-type organometal salt are decomposed during heat-treatment of a surface to form a solid electrolyte interface, a solid electrolyte interface formed by electrochemical reaction decreases to further improve capacity of the battery. A solid electrolyte interface formed by electrochemical reaction is neither thermally stable nor physically solid, and thus a battery with an electrochemically formed interface has cycle property and stability deficiencies, while a solid electrolyte interface formed by heat-treatment has superior thermal stability and thus contributes to battery stability as well as cycle life properties of a battery.

The carbon core used in the present invention is selected from a group consisting of artificial graphite, natural graphite, fiber graphite, amorphous graphite, graphite coated with amorphous carbon, and a mixture thereof.

The fluorine-type organometal salt used in the present invention is preferably a compound in which metal cations and a fluorine-type organic compound existing as anions are bound to each other, as represented by the following Chemical Formula 1 or 2:
[Chemical Formula 1]
   AₓD_{y}E_{z}M
[Chemical Formula 2]
   (A-D)ₓE_{z}M

In the Chemical Formula 1 or 2,
A is a fluorine-type organic compound containing at least one CF₃;
D is an oxidation product of C, S, or P;
E is C or N;
M is a metal atom selected from Li, Na, K, Mg, Ca, Sr, Ba, B, Al, Si, Y, Ti, or Sn;
r, x and y are independently an integer of 1 to 5; and
z is 0 or 1.

More preferably, the fluorine-type organometal salt is (C₂F₅)₂P(=O)OLi, CF₃CO₂Li, (CF₃CO)₂NLi, CF₃SO₃Li, C₄F₉SO₃Li, C₆F₅SO₃Li, C_{g}F₁₇SO₃Li, (CF₃SO₂NLi, (CF₃CH₂OSO₂)₂NLi, ((CF₃)₂CHOSO₂)₂NLi, (C₄F₉SO₂)(CF₃SO₂)NLi, (CF₃SO₂)₃CLi, (CF₃CH₂OSO₂)₃CLi, or (CF₃CF₂CH₂OSO₂)₂NLi.

The anode material for a battery of the present invention is prepared by coating a fluorine-type organometal salt on the carbon core, and heat-treating it to form a solid electrolyte interface.

The fluorine-type organometal salt to be coated is dissolved in an aqueous solution or organic solution solvent such as water or alcohol, etc., to form a uniform solution. In the solution, lithium and anions are dissociated or dissolved in molecular units. The amount of the coating layer differs according to the kinds of carbon, specific surface area, surface properties, etc., but it is preferably 0.001 to 30 mole% of the carbon.

Carbon to be coated is introduced into a solution in which an organometal salt is dissolved to prepare a slurry. The slurry is agitated and heated to remove a solvent, thereby coating an organometal salt on the surface of the carbon. The fluorine-type organometal salt is dissolved in an aqueous solution or organic solution such as water or alcohol, etc. to prepare a mixed solution. The mixed solution is sprayed on carbon flowing in hot air of 50 °C or more, and the solvent is evaporated to remove it.

Then, the coated carbon core is heat-treated at 200 to 900 °C for 10 minutes to 10 hours while introducing gases to form a carbon fluoride compound containing the new metal on the surface of the carbon. The gas for controlling the atmosphere includes air or a mixed gas of nitrogen and oxygen, and a flow rate thereof is set to 0.05 to 3.0 L/gh. Some atoms in the coating layer, although there is a variance according to temperature, may be doped into central particles during heat-treatment.

The present invention will be explained in more detail with reference to the following Examples and Comparative Examples. However, these are to illustrate the present invention and the present invention is not limited to them.

### [Example]

### Example.1 1

Lithium trifluoroacetate (CF₃CO₂Li) as a coating material was dissolved in ethanol, and agitated for 10 minutes or more to prepare a uniformly mixed solution. A graphite (MCMB 25-28, Osaka gas Ltd., Japan) core was added to the obtained mixed solution while agitating to prepare a slurry. The salt was deposited on the surface of the graphite to coat it while removing the ethanol solvent. The contents of the coating material were controlled to 0.1 mole% of graphite, assuming that all the coating material was coated on the surface of the graphite.

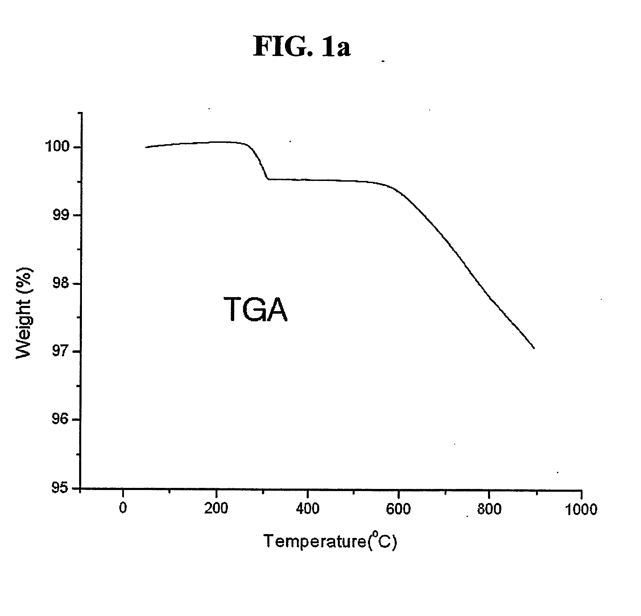

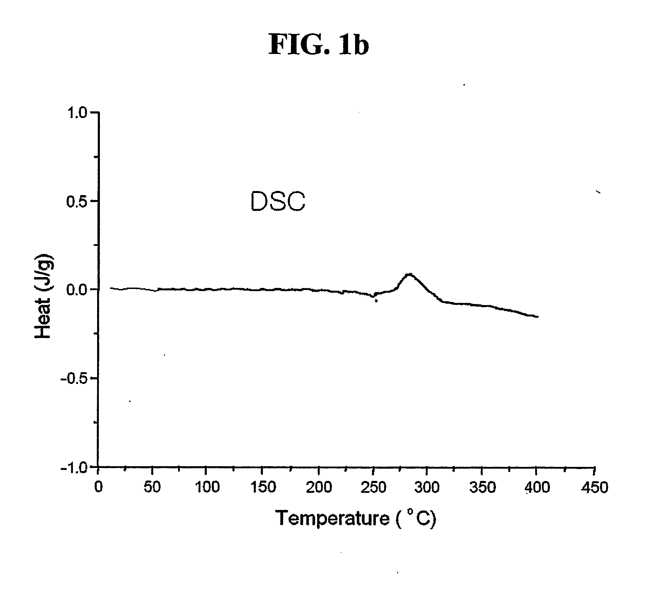

The coated graphite was heat-treated at 700 °C for 3 hours under an air atmosphere using an electric furnace to remove remaining solvent and to simultaneously cause thermolysis of the coating material, thereby coating the metal organic compound on the surface. Fig. 1 shows results of observing thermal change of the coated salt using a thermogravimetric analyzer. It was confirmed that decomposition occurred at 300 °C with accompanying large exothermic reactions.

The coated graphite was used as an anode active material to prepare an electrode. Polyvinylidene fluoride (PVdF) was used as a binder, and the mixing weight ratio of the active material and binder was 93: 7.

The binder was dissolved in n-methyl pyrrolidone (NMP) and the prepared active material was added to prepare a slurry. The slurry was coated on a copper foil by a tape casting method, and dried in a vacuum drier at 130 °C for 2 hours to prepare an anode. Lithium metal was used as a cathode. The cathode and the anode were cut to an appropriate size to manufacture a coin cell. 1 mole of LiPF₆ solution was used as an electrolyte, and ethylene carbonate (EC) and ethylmethyl carbonate (EMC) were mixed in a mole ratio of 1 : 2 to use an electrolyte solution. The manufactured cell is represented by [C/LiPF₆(1M) in EX+2EMC/Li].

### Example 2

A cell was manufactured by the same method as in Example 1, except that lithium trifluoromethanesulfonate (CF₃SO₃Li) was used as a coating material.

### Example 3

A cell was manufactured by the same method as in Example 1, except that N-lithiotrifluoromethanesulfonimide «CF₃SO₂)₂NLi) was used as a coating material.

### Example 4

A cell was manufactured by the same method as in Example 1, except that (CF₃SO₂)₃CLi was used as a coating material.

### Example 5

A cell was manufactured by the same method as in Example 1, except that (CF₃CF₂CH₂OSO₂)₂NLi was used as a coating material.

### Example 6

A cell was manufactured by the same method as in Example 1, except that CF₃CO₂Li was used as a coating material, and the mole ratio of the coating material to graphite was controlled to 0.03 mole%.

### Example 7

A cell was manufactured by the same method as in Example 1, except that (CF₂SO₂)₃CLi was used as a coating material, the mole ratio of the coating material to graphite was controlled to 0.1 mole%, and the heat-treatment temperature was 500 °C.

### Example 8

A cell was manufactured by the same method as in Example 1, except that coal tar pitch was used as the raw material, it was carbonated at 800 °C for 1 hour and then graphitized at 2800 °C for 5 hours and the product was used as a core, and (CF₃SO₂)₂NLi was used as coating material.

### Comparative Example

A cell was manufactured by the same method as in Example 1, except that the graphite (MCMB 25-28) core was not coated.

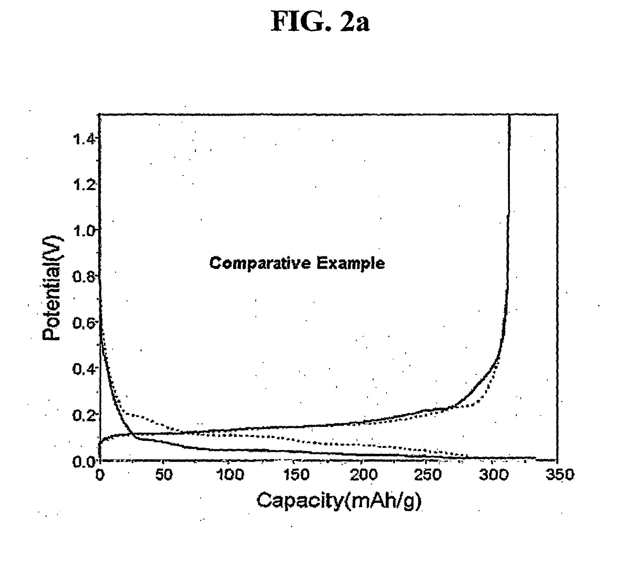

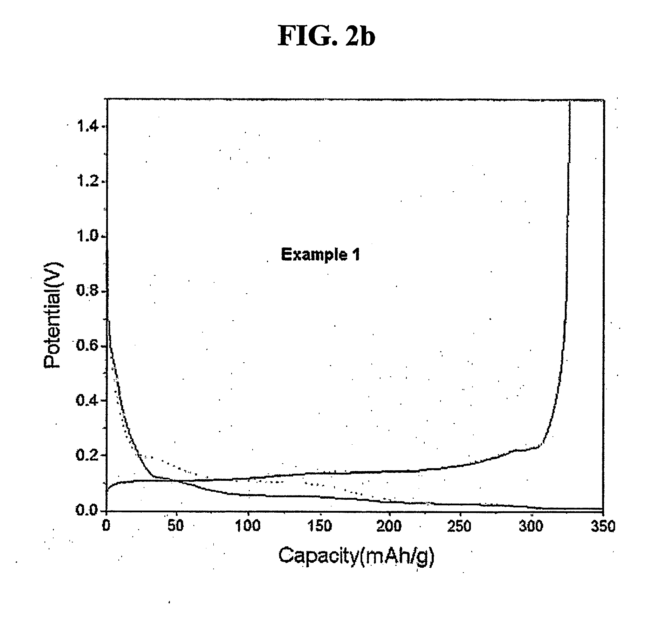

Charge/discharge properties, and C-rate, room temperature, and high temperature cycle life properties of the cells of Examples 1 to 8 and Comparative Example were evaluated, and the results are shown in Figs. 2 to 6. The charge/discharge voltage range was 1.5 to 0.005 V.

Fig. 2 shows charge and discharge curves at room temperature (25 °C), and it can be confirmed that the cell of Example 1 in which the surface of the graphite core was coated showed a larger capacity per unit weight than that of Comparative Example in which the surface of the core was not coated.

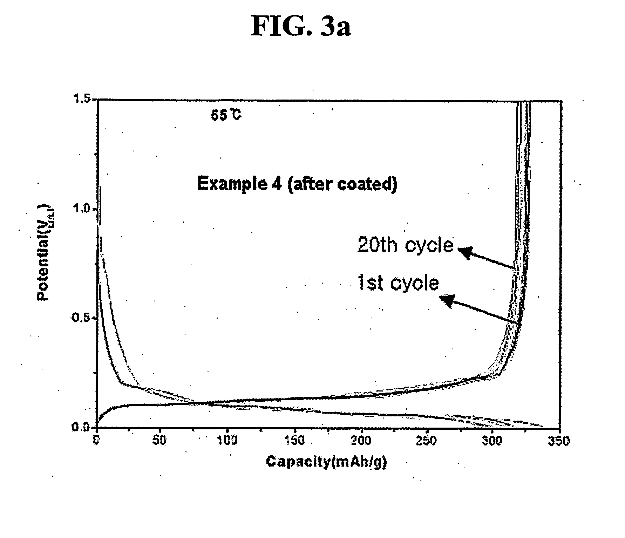

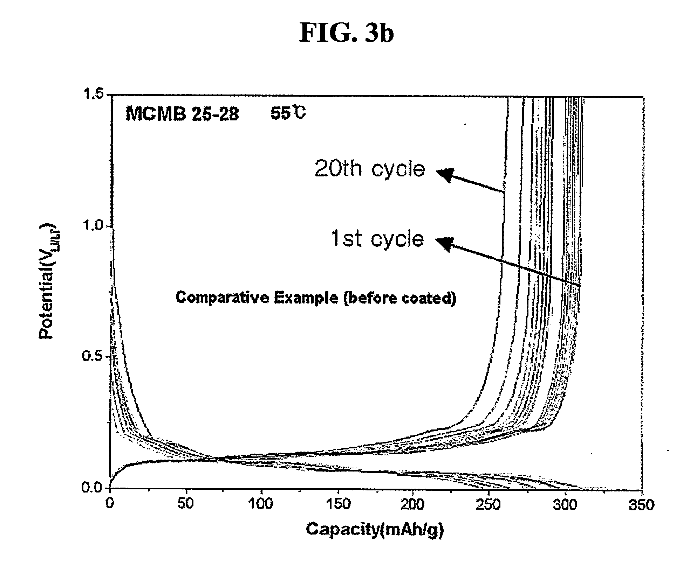

Fig. 3 shows charge and discharge curves at high temperature (55 °C), and it can be confirmed that the cell of Example 4 in which the surface of the graphite core was coated showed a small capacity decrease according to progress of cycles compared to that of Comparative Example.

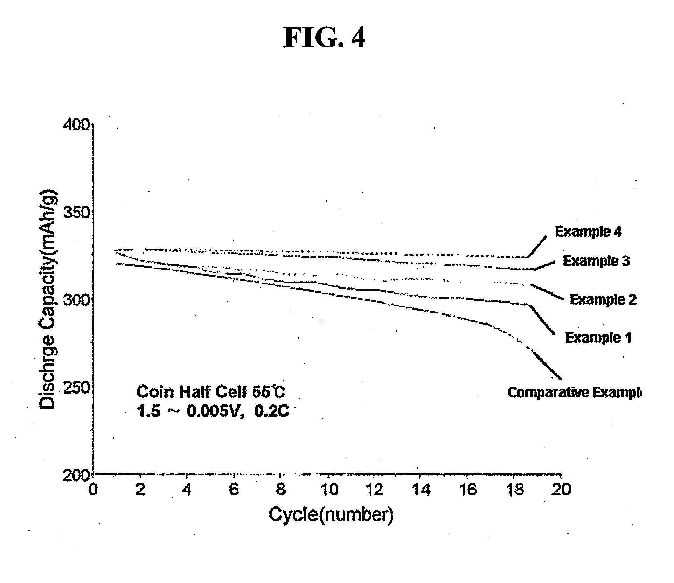

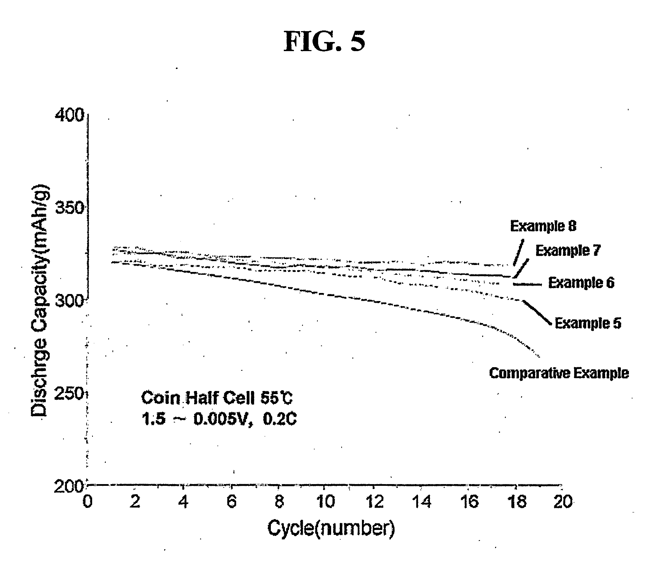

Figs. 4 and 5 show cycle life properties at high temperature (55 °C), and it can be seen that the cell of Comparative Example in which the surface of the graphite core was not coated showed a large capacity decrease according to the progress of cycles compared to those of Examples 1 to 8 in which the surface of the graphite core was coated.

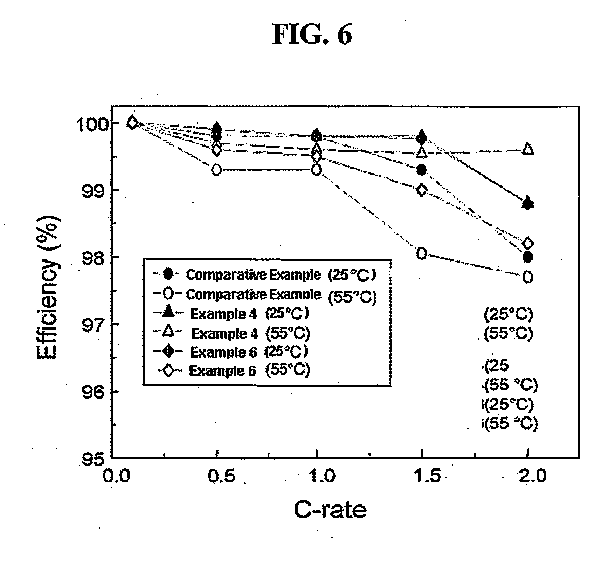

Fig. 6 shows C-rate properties, i.e., high rate charge properties at room temperature (25 °C) and high temperature (55 °C), and it can be confirmed that the cells of Examples 4 and 6 in which the surface of the graphite core were coated showed superior high rate charge properties to those of Comparative Example in which the surface of the core was not coated.

A lithium or lithium ion secondary battery comprising the surface-treated carbon as an anode material has superior room temperature and high temperature cycle life properties without using an electrolyte additive, as well as improved high temperature storage properties and battery capacity.

## Claims

1. Surface-treated carbon, comprising
a) a carbon core; and
b) a coating layer containing a fluorine-type organometal salt.

2. The surface-treated carbon according to Claim 1, wherein the a) carbon core is selected from a group consisting of artificial graphite, natural graphite, fiber graphite, amorphous carbon, graphite coated with amorphous carbon, and a mixture thereof.

3. The surface-treated carbon according to Claim 1, wherein the b) fluorine-type organometal salt is represented by the following Chemical Formula 1 or 2:
[Chemical Formula 1]
AₓD_{y}E_{z}M
[Chemical Formula 2]
(A-D)ᵣE_{z}M
(In the Chemical Formula 1 or 2,
A is a fluorine-type organic compound containing at least one CF₃;
D is an oxidation product of C, S, or P;
E is C or N;
M is a metal atom selected from Li, Na, K, Mg, Ca, Sr, Ba, B, Al, Si, Y, Ti, or
Sn;
r, x, and y are independently an integer of 1 to 5; and
z is 0 or 1.)

4. The surface-treated carbon according to Claim 3, wherein the fluorine-type organometal salt is (C₂F₅)₂P(=O)OLi, CF₃CO₂Li, (CF₃CO)₂NLi, CF₃SO₃Li, C₄F₉SO₃Li, C₆F₅SO₃Li, C₉F₁₇SO₃Li, (CF₃SO₂)₂NLi, (CF₃CH₂OSO₂)₂NLi, ((CF₃)₂CHOSO₂)₂NLi, (C₄F₉SO₂(CF₃SO₂NLi, (CF₃SO₂)₃CLi, (CF₃CH₂OSO₂)₃CLi, or (CF₃CF₂CH₂OSO₂NLi.

5. The surface-treated carbon according to Claim 1, wherein the b) fluorine-type organometal salt is coated in an amount of 0.001 to 30 moles per 100 moles of the a) carbon core.

6. A method for preparing surface-treated carbon, comprising the steps of:
a) providing a carbon core;
b) providing a fluorine-type organometal salt;
c) coating the b) fluorine-type organometal salt on the a) carbon core; and
d) heat-treating the c) coated carbon core.

7. The method for preparing surface-treated carbon according to Claim 6, wherein the c) coating is conducted by dissolving the fluorine-type organometal salt in an aqueous solution or organic solution to prepare a mixed solution, and spraying it onto carbon flowing in hot air of 50 °C or more to evaporate solvent only.

8. The method for preparing surface-treated carbon according to Claim 6, wherein, in step c), the fluorine-type organometal salt is coated in an amount of 0.001 to 30 moles per 100 moles of the carbon core.

9. The method for preparing surface-treated carbon according to Claim 6, wherein the d) heat-treatment is conducted at 200 to 900 °C for 10 minutes to 10 hours.

10. Surface-treated carbon prepared by the method of Claim 6.

11. A lithium or lithium ion secondary battery comprising the surface-treated carbon of Claim 1 as an anode active material.

## Revendications

1. Carbone traité en surface, comprenant :
a) un noyau en carbone,
b) et une couche de revêtement comprenant un sel organo-métallique fluoré.

2. Carbone traité en surface, conforme à la revendication 1, dans lequel le noyau en carbone (a) est en un matériau choisi dans l'ensemble formé par un graphite artificiel, un graphite naturel, des fibres de graphite, un carbone amorphe et un graphite revêtu de carbone amorphe, ou en un mélange de tels matériaux.

3. Carbone traité en surface, conforme à la revendication 1, dans lequel le sel organo-métallique fluoré (b) a pour formule l'une des formules chimiques 1 et 2 suivantes :
Formule chimique 1 : AₓD_{y}E_{z}M
Formule chimique 2 : (A-D)ᵣE_{z}M dans lesquelles formules chimiques 1 et 2 :
- A représente une entité organique fluorée comportant au moins un groupe CF₃ ;
- D représente une entité formée par oxydation de carbone, de soufre ou de phosphore ;
- E représente un atome de carbone ou d'azote ;
- M représente un atome d'un métal choisi parmi les lithium, sodium, potassium, magnésium, calcium, strontium, baryum, bore, aluminium, silicium, yttrium, titane et étain ;
- les indices r, x et y sont des nombres entiers valant de 1 à 5, indépendamment ;
- et l'indice z vaut 0 ou 1.

4. Carbone traité en surface, conforme à la revendication 3, dans lequel le sel organométallique fluoré est l'un des suivants :
(C₂F₅)₂P(=O)OLi, CF₃CO₂Li, (CF₃CO)₂NLi, CF₃SO₃Li, C₄F₉SO₃Li,
C₆F₅SO₃Li, C₉F₁₇SO₃Li, (CF₃SO₂)₂NLi, (CF₃CH₂OSO₂)₂NLi,
((CF₃)₂CHOSO₂)₂NLi, (C₄F₉SO₂)(CF₃SO₂)NLi, (CF₃SO₂)₃CLi,
(CF₃CH₂OSO₂)₃CLi, et (CF₃CF₂CH₂OSO₂)₂NLi.

5. Carbone traité en surface, conforme à la revendication 1, dans lequel la quantité de sel organométallique fluoré (b) du revêtement vaut de 0,001 à 30 moles pour 100 moles de carbone du noyau (a).

6. Procédé de préparation d'un carbone traité en surface, lequel procédé comporte les étapes suivantes :
a) prendre un noyau en carbone,
b) prendre un sel organo-métallique fluoré,
c) former avec le sel organométallique fluoré (b) un revêtement sur le noyau en carbone (a),
d) et soumettre le noyau de carbone ainsi revêtu (c) à un traitement thermique.

7. Procédé de préparation d'un carbone traité en surface, conforme à la revendication 6, dans lequel on effectue l'étape (c) de formation d'un revêtement en dissolvant le sel organométallique fluoré dans de l'eau ou un solvant organique pour en faire une solution, et en pulvérisant cette solution sur du carbone en circulation dans de l'air chaud à 50 °C ou plus, de manière à ce que seul le solvant s'évapore.

8. Procédé de préparation d'un carbone traité en surface, conforme à la revendication 6, dans lequel, dans l'étape (c), la quantité de sel organométallique fluoré (b) formant le revêtement vaut de 0,001 à 30 moles pour 100 moles de carbone du noyau.

9. Procédé de préparation d'un carbone traité en surface, conforme à la revendication 6, dans lequel on effectue le traitement thermique (d) à une température de 200 à 900 °C, durant un laps de temps de 10 minutes à 10 heures.

10. Carbone traité en surface, préparé selon un procédé conforme à la revendication 6.

11. Pile secondaire au lithium ou lithium-ion, comprenant, en tant que matière active d'anode, un carbone traité en surface, conforme à la revendication 1.

## Patentansprüche

1. Oberflächenbehandelter Kohlenstoff, umfassend
a) einen Kohlenstoffkern; und
b) eine Überzugsschicht, die ein Organometallsalz vom Fluortyp enthält.

2. Oberflächenbehandelter Kohlenstoff nach Anspruch 1, wobei der a) Kohlenstoffkern aus einer aus künstlichem Graphit, natürlichem Graphit, Fasergraphit, amorphem Kohlenstoff, mit amorphem Kohlenstoff beschichtetem Graphit und einer Mischung davon bestehenden Gruppe ausgewählt ist.

3. Oberflächenbehandelter Kohlenstoff nach Anspruch 1, wobei das b) Organometallsalz vom Fluortyp durch die folgende Chemische Formel 1 oder 2 repräsentiert wird:
[Chemische Formel 1]
AₓD_{y}E_{z}M
[Chemische Formel 2]
(A-D)ᵣE_{z}M
(In der Chemischen Formel 1 oder 2 ist
A eine organische Verbindung vom Fluortyp, die mindestens ein CF₃ enthält;
D ein Oxidationsprodukt von C, S oder P;
E C oder N;
M ein Metallatom, das aus Li, Na, K, Mg, Ca, Sr, Ba, B, Al, Si, Y, Ti oder Sn ausgewählt ist;
r, x und y sind unabhängig voneinander eine ganze Zahl von 1 bis 5; und
z ist 0 oder 1.)

4. Oberflächenbehandelter Kohlenstoff nach Anspruch 3, wobei das Organometallsalz vom Fluortyp (C₂F₅)₂P(=O)OLi, CF₃CO₂Li, (CF₃CO)₂NLi, CF₃SO₃Li, C₄F₉SO₃Li, C₆F₅SO₃Li, C₉F₁₇SO₃Li, (CF₃SO₂)₂NLi, (CF₃CH₂OSO₂)₂NLi, ((CF₃)₂CHOS0₂)₂NLi, (C₄F₉SO₂)(CF₃SO₂)NLi, (CF₃SO₂)₃CLi, (CF₃CH₂OSO₂)₃CLi oder (CF₃CF₂CH₂OSO₂)₂NLi ist.

5. Oberflächenbehandelter Kohlenstoff nach Anspruch 1, wobei das b) Organometallsalz vom Fluortyp in einer Menge von 0,001 bis 30 mol pro 100 mol des a) Kohlenstoffkerns aufgetragen ist.

6. Verfahren zur Herstellung von oberflächenbehandeltem Kohlenstoff, mit den folgenden Schritten:
a) Bereitstellen eines Kohlenstoffkerns;
b) Bereitstellen eines Organometallsalzes vom Fluortyp;
c) Auftragen des b) Organometallsalzes vom Fluortyp auf den a) Kohlenstoffkern; und
d) Wärmebehandeln des c) beschichteten Kohlenstoffkerns.

7. Verfahren zur Herstellung von oberflächenbehandeltem Kohlenstoff nach Anspruch 6, wobei das c) Beschichten durchgeführt wird, indem das Organometallsalz vom Fluortyp in einer wässrigen Lösung oder organischen Lösung gelöst wird, um eine gemischte Lösung herzustellen, und indem es dann auf in heißer Luft von 50°C oder mehr strömenden Kohlenstoff gesprüht wird, um nur das Lösungsmittel zu verdampfen.

8. Verfahren zur Herstellung von oberflächenbehandeltem Kohlenstoff nach Anspruch 6, wobei in Schritt c) das Organometallsalz vom Fluortyp in einer Menge von 0,001 bis 30 mol pro 100 mol des Kohlenstoffkerns aufgetragen wird.

9. Verfahren zur Herstellung von oberflächenbehandeltem Kohlenstoff nach Anspruch 6, wobei die d) Wärmebehandlung bei 200 bis 900°C für 10 Minuten bis 10 Stunden durchgeführt wird.

10. Oberflächenbehandelter Kohlenstoff, der nach dem Verfahren von Anspruch 6 hergestellt ist.

11. Sekundäre Lithium- oder Lithiumionenbatterie, die den oberflächenbehandelten Kohlenstoff nach Anspruch 1 als aktives Anodenmaterial umfasst.
